# FASCICULE DE BREVET EUROPEEN

(11) **EP 1 422 663 B1**
(45) Date de publication et mention de la délivrance du brevet: **16.04.2014**
(21) Numéro de dépôt: 03292599.2
(22) Date de dépôt: 17.10.2003
(51) Int. Cl.: G06T 7/60, B60Q 1/14

(54) **Procédé et dispositif de détermination de la distance de visibilité du conducteur d'un véhicule**
Verfahren und Anordnung zur Bestimmung der Sichtweite eines Fahrzeuglenkers
Method and apparatus for determining the distance of visibility of the driver of a vehicle

(30) Priorité: 19.11.2002 FR 0214775
(43) Date de publication de la demande: 26.05.2004
(73) Titulaire: VALEO VISION, 93012 Bobigny Cedex (FR)
(72) Inventeur: Leleve, Joel c/o Valeo Vision, 93012 Bobibny Cédex (FR); Rebut, Julien c/o Valeo Vision, 93012 Bobibny Cédex (FR); Bensrhair, Abdelaziz c/o Valeo Vision, 93012 Bobibny Cédex (FR)

(56) Documents cités:
- EP-A- 0 642 950
- WO-A-97/16926
- DE-A- 10 034 461
- US-A- 5 987 152
- BUSCH C ET AL: "Wavelet transform for analyzing fog visibility" IEEE INTELLIGENT SYSTEMS, NOV.-DEC. 1998, IEEE, USA, [en ligne] vol. 13, no. 6, pages 66-71, XP002247567 ISSN: 1094-7167 Extrait de l'Internet: <URL:http://dg1-2.internal.epo.org/> [extrait le 2003-07-09]
- BARUN V V ET AL: "Nontraditional features in active vision through a turbid medium: evaluation and optimization based on modern radiative transfer approaches" INTELLIGENT ROBOTS AND COMPUTER VISION XVIII: ALGORITHMS, TECHNIQUES, AND ACTIVE VISION, BOSTON, MA, USA, 20-21 SEPT. 1999, vol. 3837, pages 414-425, XP008019411 Proceedings of the SPIE - The International Society for Optical Engineering, 1999, SPIE-Int. Soc. Opt. Eng, USA ISSN: 0277-786X
- HAUTIERE N: "AMELIORATION ET EXTENSION D'UN DETECTEUR DE BROUILLARD EMBARQUE", MEMOIRE DE DEA, UNIVERSITE JEAN MONNET, SAINT-ETIENNE, FR, 12 September 2002 (2002-09-12), pages 1-113, XP008044586, Laboratoire LIVIC, INRETS/LCPC

## Description

La présente invention concerne un procédé et un dispositif de détermination de la distance de visibilité du conducteur d'un véhicule en présence d'un élément perturbant la visibilité dudit conducteur tel que le brouillard dans un champ de l'environnement du véhicule. Elle est particulièrement adaptée au domaine de l'éclairage et de la signalisation de véhicules routiers.

L'invention concerne également un système de commande de projecteurs et/ou de feux antibrouillards et/ou de la vitesse du véhicule.

L'allumage et l'extinction des feux antibrouillards étaient initialement commandés manuellement par le conducteur grâce à un commutateur disposé sur le tableau de bord.

Cependant, si le conducteur oublie de rendre actif ses feux de brouillard, il existe une situation de danger importante.

Inversement, l'utilisation des feux antibrouillards n'est pas toujours réalisée à bon escient par les conducteurs. Ainsi, l'utilisation à mauvais escient de ces feux, et en particulier des feux arrière de brouillard, peut provoquer une gêne du conducteur se trouvant derrière alors que les conditions de visibilité ne justifient pas l'utilisation de ces feux.

En effet, le conducteur se trouvant derrière peut être ébloui et ne pas distinguer rapidement un allumage des feux indicateurs de freinage du véhicule situé devant entraînant de ce fait un risque de collision.

Afin de remédier aux problèmes mentionnés ci-dessus, plusieurs solutions ont été proposées visant à fournir des dispositifs de détection de la présence de brouillard pour commander automatiquement l'allumage des feux.

Une première solution consiste à utiliser un détecteur de brouillard installé dans un feu arrière, ledit détecteur utilisant le principe de la retro-diffusion d'une lumière infrarouge sur les gouttelettes de brouillard.

Toutefois, cette première solution est très perturbée par des phénomènes aérodynamiques tels que la turbulence des couches d'air situées sur l'arrière du véhicule. Sa sensibilité devient alors insuffisante.

Une seconde solution consiste à analyser un échantillon de brouillard parcourant une chambre de mesure évaluant la transmission et la diffusion créées par les particules d'eau.

Cependant, les effets parasites liés à l'intégration sur le véhicule, comme les variations de pression, de température ou de flux d'air conduisent à des résultats difficiles à interpréter.

Une troisième solution utilise des moyens de mesure de temps de vol de photons, utilisés notamment dans des systèmes anti-collision de type LIDAR (Light Detection and Ranging) permettant d'évaluer la transmission de l'atmosphère et donc de déduire la présence de brouillard.

De tels systèmes sont cependant très coûteux ; de plus, la présence d'eau sur les moyens optiques de mesure suffit à fausser totalement les mesures.

Une quatrième solution est proposée dans le document EP0687594 ; ce dernier décrit un procédé de détection de la présence de brouillard comportant une étape de relevé d'une image d'un champ de l'espace et une étape pour déterminer une valeur caractéristique du contraste moyen de l'image, un signal de détection étant émis en fonction ladite valeur de contraste.

Cette quatrième solution permet donc l'envoi d'un signal de commande entraînant l'allumage des feux en présence de brouillard. Elle pose cependant certaines difficultés.

En effet, le procédé décrit fonctionne en tout ou rien ; il permet d'envoyer un signal de commande aux feux de brouillard selon qu'il y a ou non du brouillard mais il ne permet en aucun cas de quantifier la densité de brouillard et de déterminer ainsi la distance de visibilité du conducteur en présence de brouillard. Il ne permet donc pas d'agir sur l'intensité des feux ou sur la vitesse du véhicule en fonction de la visibilité du conducteur.

Une dernière solution est connue de la publication Hautière N.: "Amélioration et extension d'un détecteur de brouillard embarqué", Mémoire de DEA, Laboratoire sur les Interactions Véhicules - Infrastructure - Conducteurs (LIVIC) INRETS/LCPC, Université Jean Monnet, Saint-Étienne, France, 12 septembre 2002 (2002-09-12), pages 1-113.

Cette publication décrit un procédé de détermination de la distance de visibilité du conducteur d'un véhicule en présence d'un élément perturbant ou modifiant la visibilité dudit conducteur dans un champ de l'environnement dudit véhicule, choisi parmi le brouillard, la fumée, la pluie ou la neige, comportant une étape de relevé d'au moins une image d'un champ de l'espace, ledit procédé comportant les étapes suivantes :
- séparation de ladite image par une bande verticale,
- détermination de la luminosité des pixels de ladite bande verticale en fonction de la position en hauteur desdits pixels sur ladite bande verticale,
- calcul du point d'inflexion de la courbe représentant ladite luminosité en fonction de ladite position,
- détermination de la distance de visibilité du conducteur dudit véhicule à partir de la position dudit point d'inflexion sur ladite image.

Ce procédé de l'art antérieur est essentiellement basé sur la détermination d'une bande de mesure au centre de l'image, la largeur de cette bande étant paramétrable. Le choix d'une bande de mesure pose différents problèmes, tels qu'énoncés par exemple aux paragraphes 6.2 (page 42) et 6.3 (page 46) de ce document.

La présente invention vise à fournir à bas coût un procédé de détermination de la distance de visibilité du conducteur d'un véhicule en présence d'un élément perturbant la visibilité dudit conducteur dans un champ de l'environnement dudit véhicule permettant non seulement de commander de façon fiable et insensible aux turbulences aérodynamiques l'allumage et l'extinction des feux selon que l'élément est ou non présent mais aussi de déterminer la distance de visibilité du conducteur en présence dudit élément et d'agir sur l'intensité des feux ou sur la vitesse du véhicule en fonction de la visibilité du conducteur.

La présente invention propose à cet effet un procédé de détermination de la distance de visibilité du conducteur d'un véhicule en présence d'un élément perturbant et/ou modifiant la visibilité dudit conducteur dans un champ de l'environnement dudit véhicule comportant une étape de relevé d'au moins une image d'un champ de l'espace, ledit procédé étant caractérisé en ce qu'il comporte les étapes suivantes :
- une étape de recherche des zones de ladite image répondant chacune à un prédicat d'homogénéité,
- une détermination du centre de gravité de chacune desdites zones,
- une détermination du centre de gravité global de chacun desdits centres de gravité desdites zones,
- une détermination d'une ligne verticale ou substantiellement verticale passant par ledit centre de gravité global,
- séparation de ladite image en deux parties par la ligne verticale ou substantiellement verticale passant par ledit centre de gravité global,
- détermination de la luminosité des pixels de ladite ligne verticale ou substantiellement verticale en fonction de la position en hauteur desdits pixels sur ladite ligne verticale ou substantiellement verticale,
- calcul du point d'inflexion de la courbe représentant ladite luminosité en fonction de ladite position,
- détermination de la distance de visibilité du conducteur dudit véhicule à partir de la position dudit point d'inflexion sur ladite image.

On comprend par "substantiellement verticale " une ligne qui est verticale ou qui est inclinée d'un angle faible par rapport à la verticale (par exemple de quelques degrés, notamment de 0.5 à 15°).

Grâce à l'invention, le relevé d'image par un dispositif du type caméra est insensible aux turbulences atmosphériques à proximité du véhicule.

De plus, le procédé permet non seulement de déclencher les feux antibrouillards mais il quantifie également la visibilité du conducteur et permet ainsi d'agir sur l'intensité desdits feux ou sur la vitesse du véhicule.

Le procédé est économique dans la mesure où la caméra et le traitement peuvent être dédiés à d'autres fonctions telles que le suivi de non-dépassement d'une ligne blanche, l'anticipation d'un virage ou la vision nocturne par caméra infrarouge.

Le relevé d'image peut se faire aisément en plaçant par exemple une caméra derrière le pare brise, dans un autre lieu bénéficiant d'essuie-glace ou de lave glace tel que le projecteur, ou à tout autre endroit approprié du véhicule.

Avantageusement, ledit élément perturbant la visibilité dudit conducteur est choisi parmi le brouillard, la fumée, la pluie ou la neige.

De manière avantageuse, ledit procédé comporte une étape d'émission d'un signal de détection lorsque ladite distance de visibilité passe au-dessous d'un certain seuil.

Ce mode de réalisation est plus précis que l'utilisation d'une ligne verticale passant par le centre de l'image.

Avantageusement, ladite étape de recherche des zones de ladite image répondant chacune à un prédicat d'homogénéité est réalisée par une méthode de segmentation par division-fusion telle que la méthode tetra-arbre (Quadtree en anglais).

De manière avantageuse, ladite luminosité desdits pixels est représentée par un niveau de gris.

Avantageusement, le calcul du point d'inflexion de la courbe représentant ladite luminosité en fonction de ladite position est réalisé en dérivant ladite courbe.

Avantageusement, ladite distance de visibilité est corrigée en prenant en compte l'assiette dudit véhicule.

Selon un mode de réalisation très avantageux, ledit procédé comporte une étape préalable de calibrage déterminant la limite de l'horizon par temps clair.

La présente invention a également pour objet un dispositif pour la mise en oeuvre du procédé selon l'invention comportant une caméra pour relever au moins une image d'un champ de l'espace, ledit dispositif étant caractérisé en ce qu'il comporte :
- des moyens pour rechercher des zones de ladite image répondant chacune à un prédicat d'homogénéité,
- des moyens pour déterminer le centre de gravité de chacune desdites zones,
- des moyens pour déterminer le centre de gravité global de chacun desdits centres de gravité desdites zones,
- des moyens pour déterminer une ligne verticale ou substantiellement verticale passant par ledit centre de gravité global,
- des moyens pour séparer ladite image en deux parties par une ligne verticale ou substantiellement verticale passant par ledit centre de gravité global,
- des moyens pour déterminer la luminosité des pixels de ladite ligne verticale ou substantiellement verticale en fonction de la position en hauteur desdits pixels sur ladite ligne verticale ou substantiellement verticale,
- des moyens de calcul du point d'inflexion de la courbe représentant ladite luminosité en fonction de ladite position,
- des moyens de détermination de la distance de visibilité du conducteur dudit véhicule à partir de la position dudit point d'inflexion sur ladite image,

De manière avantageuse, ledit dispositif comporte un dispositif émetteur d'un signal de commande fonction de ladite distance de visibilité.

De manière avantageuse, ledit dispositif comporte des moyens pour détecter le passage de ladite distance de visibilité au-dessous d'un certain seuil.

Selon un premier mode de réalisation de l'invention, ladite caméra se situe derrière le pare brise dudit véhicule.

Selon un deuxième mode de réalisation de l'invention, ladite caméra se situe dans le projecteur dudit véhicule.

La présente invention a en outre pour objet un système de commande d'au moins un projecteur et/ou d'un feu antibrouillard de véhicule caractérisé en ce qu'il comporte un dispositif selon l'invention dont ledit dispositif émetteur est relié aux organes de puissance dudit projecteur et/ou dudit feu, ledit signal de commande commandant l'allumage et/ou l'intensité dudit feu et/ou dudit projecteur en fonction de ladite distance de visibilité.

Ainsi, le système peut faire varier l'intensité du feu ou du projecteur en prenant en considération la valeur de la distance de visibilité contrairement à un système tout ou rien.

La présente invention a enfin pour objet un système de régulation de la vitesse d'un véhicule caractérisé en ce qu'il comporte un dispositif selon l'invention dont ledit dispositif émetteur est relié à un organe de commande de la vitesse du véhicule, ledit signal de commande régulant la vitesse du véhicule en fonction de ladite distance de visibilité.

D'autres caractéristiques et avantages de la présente invention apparaîtront dans la description suivante d'un mode de réalisation de l'invention donné à titre illustratif et nullement limitatif.

Dans les figures suivantes :
- La figure 1 représente schématiquement un dispositif pour la mise en oeuvre du procédé selon l'invention,
- La figure 2 représente une image telle que relevée dans le procédé selon l'invention,
- La figure 3 représente une courbe de luminosité obtenue à partir de l'image représentée en figure 2,
- La figure 4 représente une courbe dérivée de la courbe de luminosité représentée en figure 3,
- La figure 5 représente l'image représentée en figure 2 sur laquelle est insérée une ligne de visibilité.

Dans toutes les figures, les éléments communs portent les mêmes numéros de référence.

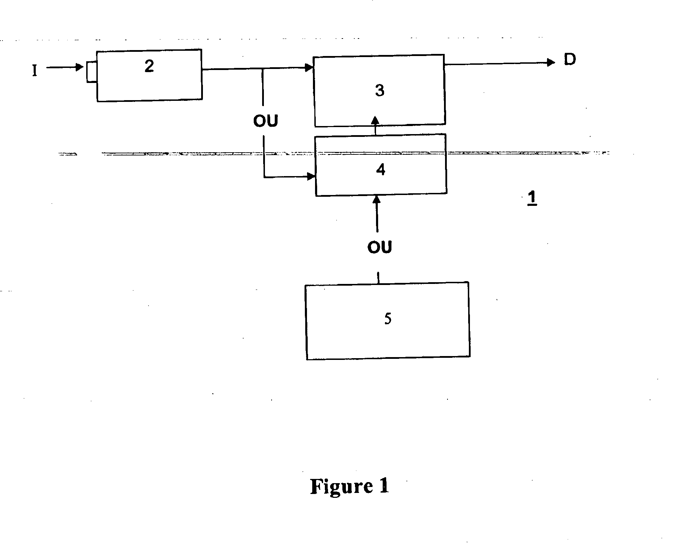

La figure 1 représente schématiquement un dispositif 1 pour la mise en oeuvre du procédé selon l'invention et situé à bord d'un véhicule automobile non représenté.

Le dispostif 1 comporte :
- une caméra 2,
- des moyens 3 pour déterminer une distance de visibilité d'un conducteur du véhicule,
- des moyens 4 pour calculer l'assiette du véhicule,
- un capteur 5.

La caméra 2 se trouve préférentiellement derrière le pare-brise du véhicule de façon à être dans une zone balayée par les essuie-glace.

La caméra 2 saisit une image I située devant le véhicule pour anticiper l'allumage de projecteurs avant l'entrée dans une zone de brouillard.

L'image I est traitée par les moyens 3 pour déterminer la distance de visibilité D du conducteur.

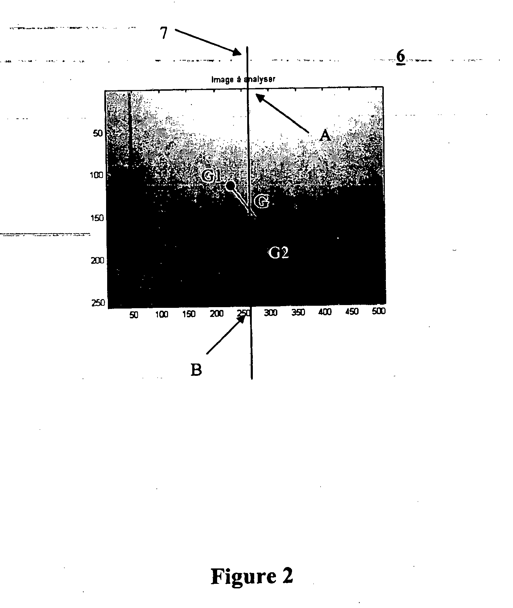

Les moyens 3 pour déterminer D sont des moyens logiciels et seront expliqués plus en détail en référence avec les figures 2 à 5.

Le capteur 5 se trouve préférentiellement sur la suspension du véhicule et permet de fournir des informations aux moyens 4 pour calculer l'assiette du véhicule.

Selon une alternative, les moyens 3 de détermination de D peuvent prendre en considération l'assiette calculée par les moyens 4 pour ajuster la distance de visibilité D.

La figure 2 représente une image 6 en noir et blanc prise par une caméra telle que la caméra 2 représentée sur la figure 1.

L'image 6 représente un champ de l'environnement du véhicule représentant une route en présence de brouillard ; elle comporte un ensemble de pixels représentant chacun des points de l'image dont la luminosité va du noir au blanc. Chaque pixel est par exemple codé sur un octet avec 256 niveaux de gris possibles. Les points de l'image peuvent être repérés en hauteur par les lignes de balayage de l'image variant de 0 à 250.

Les moyens 3 de détermination de la distance de visibilité du conducteur tels que représentés en figure 1 commencent par effectuer une recherche des zones de l'image répondant chacune à un prédicat d'homogénéité.

Cette recherche peut par exemple être réalisée à l'aide d'une méthode de segmentation par division-fusion telle que la méthode tetra-arbre (Quadtree en anglais) ; le tetra-arbre possède une pluralité de noeuds, chaque noeud possédant exactement quatre noeuds fils, excepté les noeuds terminaux. Chaque noeud correspond à un bloc, c'est à dire à une zone de l'image de forme carrée. Chaque bloc associé à un noeud est analysé de façon récursive afin de décider s'il doit être divisé en quatre sous-blocs. L'analyse récursive s'arrête lorsque chacun des sous-blocs respecte un prédicat d'homogénéité colorimétrique utilisant des matrices de cooccurrence.

D'autres méthodes telles que les algorithmes de k-means peuvent également être utilisées.

L'application de la recherche de zones d'homogénéité permet de définir deux régions sur l'image 6 ayant respectivement pour centres de gravité G1 et G2.

On calcule ensuite le centre de gravité G des deux centres de gravité G1 et G2 par lequel on fait passer une ligne verticale 7.

Chacun des points de la ligne verticale 7 peut être caractérisé par une ligne de balayage et une luminosité correspondant à un certain niveau de gris.

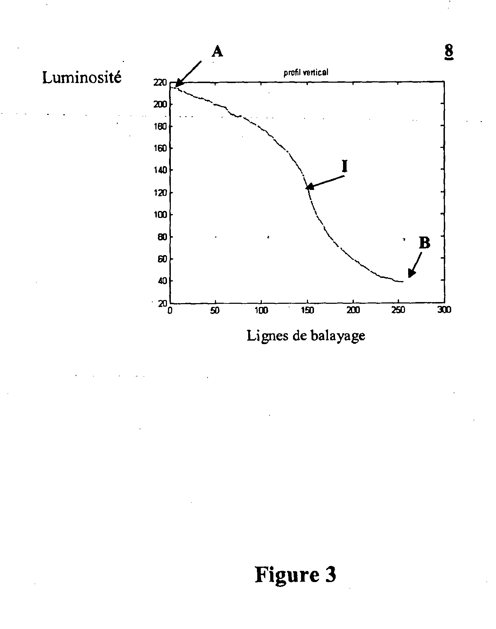

La figure 3 représente une courbe de luminosité 8 obtenue à partir de l'image 6 représentée en figure 2.

La courbe 8 représente en ordonnée, la valeur du niveau de gris des points de la ligne 7 représentée en figure 2 et en abscisse, le numéro de la ligne de balayage de ces mêmes points.

Ainsi, le point A correspond à la ligne de balayage 0 et a un niveau de gris égal à environ 220.

De même, le point B correspond à la ligne de balayage 250 et a un niveau de gris égal à environ 40.

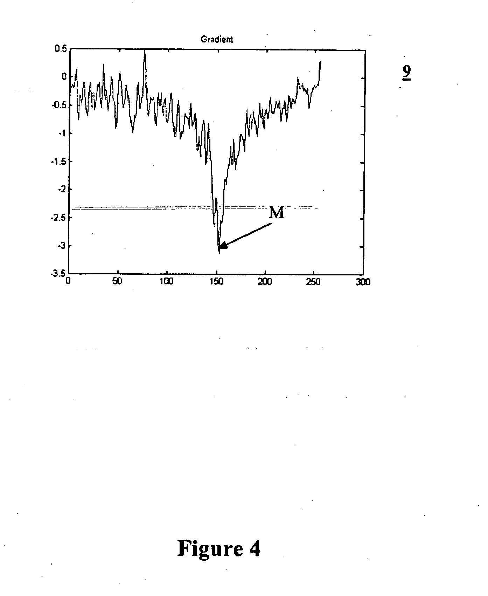

La figure 4 représente une courbe 9 correspondant à la dérivée de la courbe de luminosité 8 représentée en figure 3.

Cette courbe 9 présente un minimum M correspondant à un point d'inflexion I de la courbe 8 telle que représentée en figure 3.

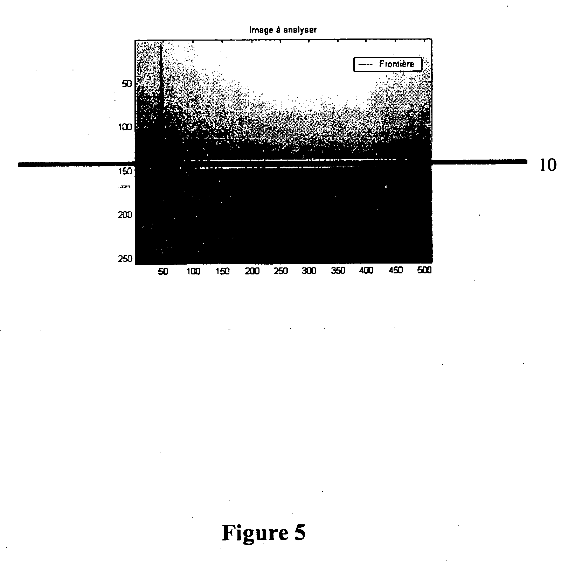

Le point d'inflexion I définit une ligne de balayage 10 telle que représenté en figure 5. Cette ligne de balayage permet de déterminer la distance de visibilité du conducteur en fonction des caractéristiques de la caméra.

En fonction de la charge du véhicule, la distance de visibilité calculée peut devenir erronée car l'horizon semble plus proche quand la charge du véhicule augmente. Cette incertitude peut être corrigée en introduisant la valeur d'assiette du véhicule obtenue par exemple grâce au capteur tel que représenté en figure 1.

En complément, un calibrage initial ou en cours d'utilisation peut être envisagé ; celui-ci recherche la limite de l'horizon par temps clair et permet de déduire la distance de visibilité réelle par compensation. Ce type de calibrage peut être réalisé par exemple par un potentiomètre ou un traitement logiciel de l'image.

Lorsque la distance de visibilité passe au-dessous d'un certain seuil, un signal de détection peut être émis, permettant de ce fait l'allumage les feux antibrouillards.

De même, lorsque la distance de visibilité redevient normale, les feux antibrouillards peuvent être éteints.

L'accès à la distance de visibilité permet d'agir en outre sur l'intensité des feux antibrouillards en fonction de l'impact du brouillard sur la distance de visibilité.

Le signal de détection peut ainsi servir de signal de commande envoyé par exemple sur un bus CAN (Controller Area Network) relié à une carte du type LCS (Light Control System).

Cette distance de visibilité permet également d'agir directement sur la vitesse du véhicule qui peut être ainsi régulée.

Bien entendu, l'invention n'est pas limitée au mode de réalisation qui vient d'être décrit.

Notamment, la méthode de recherche des zones d'homogénéité a été décrite dans le cas des méthodes de segmentation par division-fusion mais d'autres méthodes de segmentation peuvent être utilisées telles que les méthodes par division de régions ou par croissance de régions.

En outre, la luminosité a été décrite en référence avec le niveau de gris des pixels de l'image mais elle peut également être représentée par une autre grandeur en fonction du codage d'image utilisé.

De même, le procédé selon l'invention a été décrit dans le cas d'une détection de brouillard mais le procédé est également transposable à d'autres éléments perturbant la visibilité du conducteur tels que la pluie, la fumée ou la neige.

L'invention concerne aussi le véhicule automobile utilisant le procédé décrit plus haut.

L'invention concerne également la possibilité de moduler/ajuster la photométrie du faisceau lumineux émis par le feu de signalisation ou par le projecteur, notamment son intensité lumineuse. Cette modulation peut se faire en modulant de façon appropriée l'alimentation électrique de la ou des sources lumineuses. Cette modulation est de préférence commandée à l'aide d' un système de régulation automatisé, prenant en compte un ou plusieurs paramètres déterminés par des mesures obtenues directement par un ou plusieurs capteurs ou par calcul à partir de ce type de mesure. Un paramètre particulièrement intéressant pour cette modulation automatisée est justement la détermination de la distance de visibilité décrite plus haut. Mais tout autre type de paramètre peut être choisi, comme la vitesse du véhicule, ou toute mesure faite par une caméra infra-rouge en vision de nuit, ou tout autre type de caméra ou instrument de mesure présent sur le véhicule, la mesure de l'assiette du véhicule, ou toute donnée émanant d'un système de navigation comme le système dit GPS (pour Global positioning System).

## Revendications

1. Procédé de détermination de la distance de visibilité (D) du conducteur d'un véhicule en présence d'un élément perturbant ou modifiant la visibilité dudit conducteur dans un champ de l'environnement dudit véhicule, choisi parmi le brouillard, la fumée, la pluie ou la neige, comportant une étape de relevé d'au moins une image (6) d'un champ de l'espace, ledit procédé étant **caractérisé en ce qu'**il comporte les étapes suivantes :
- une étape de recherche des zones de ladite image répondant chacune à un prédicat d'homogénéité,
- une détermination du centre de gravité (G1, G2) de chacune desdites zones,
- une détermination du centre de gravité global (G) de chacun desdits centres de gravité (G1, G2) desdites zones,
- une détermination d'une ligne verticale ou substantiellement verticale (7) passant par ledit centre de gravité global (G),
- séparation de ladite image en deux parties par la ligne verticale ou substantiellement verticale (7) passant par ledit centre de gravité global (G),
- détermination de la luminosité des pixels de ladite ligne verticale ou substantiellement verticale (7) en fonction de la position en hauteur desdits pixels sur ladite ligne verticale ou substantiellement verticale (7),
- calcul du point d'inflexion (I) de la courbe (8) représentant ladite luminosité en fonction de ladite position,
- détermination de la distance (D) de visibilité du conducteur dudit véhicule à partir de la position dudit point d'inflexion (I) sur ladite image (6).

2. Procédé selon la revendication précédente, **caractérisé en ce qu'**il comporte une étape d'émission d'un signal de détection lorsque ladite distance de visibilité (D) passe au-dessous d'un certain seuil.

3. Procédé selon la revendication 1, **caractérisé en ce que** ladite étape de recherche des zones de ladite image répondant chacune à un prédicat d'homogénéité est réalisée par une méthode de segmentation par division-fusion.

4. Procédé selon l'une des revendications précédentes, **caractérisé en ce que** ladite luminosité desdits pixels est représentée par un niveau de gris.

5. Procédé selon l'une des revendications précédentes, **caractérisé en ce que** le calcul du point d'inflexion de la courbe représentant ladite luminosité en fonction de ladite position est réalisé en dérivant (9) ladite courbe.

6. Procédé selon l'une des revendications précédentes, **caractérisé en ce que** ladite distance de visibilité est corrigée en prenant en compte l'assiette dudit véhicule.

7. Procédé selon l'une des revendications précédentes, **caractérisé en ce qu'**il comporte une étape préalable de calibrage déterminant la limite de l'horizon par temps clair.

8. Dispositif (1) pour la mise en oeuvre du procédé, selon l'une des revendications précédentes comportant une caméra (2) pour relever au moins une image d'un champ de l'espace, ledit dispositif étant **caractérisé en ce qu'**il comporte :
- des moyens pour rechercher des zones de ladite image répondant chacune à un prédicat d'homogénéité,
- des moyens pour déterminer le centre de gravité (G1, G2) de chacune desdites zones,
- des moyens pour déterminer le centre de gravité global (G) de chacun desdits centres de gravité (G1, G2) desdites zones,
- des moyens pour déterminer une ligne verticale ou substantiellement verticale (7) passant par ledit centre de gravité global (G),
- des moyens pour séparer ladite image en deux parties par une ligne verticale ou substantiellement verticale (7) passant par ledit centre de gravité global (G),
- des moyens pour déterminer la luminosité des pixels de ladite ligne verticale ou substantiellement verticale (7) en fonction de la position en hauteur desdits pixels sur ladite ligne verticale ou substantiellement verticale,
- des moyens de calcul du point d'inflexion de la courbe représentant ladite luminosité en fonction de ladite position,
- des moyens de détermination de la distance de visibilité du conducteur dudit véhicule à partir de la position dudit point d'inflexion sur ladite image,

9. Dispositif selon la revendication 8, **caractérisé en ce que** ladite caméra se situe derrière le pare brise dudit véhicule.

10. Dispositif selon la revendication 8, **caractérisé en ce que** ladite caméra se situe dans le projecteur dudit véhicule.

11. Dispositif selon l'une des revendications 8 à 10 comportant un dispositif émetteur d'un signal de commande fonction de ladite distance de visibilité.

12. Dispositif selon l'une des revendications 8 à 11 comportant des moyens pour détecter le passage de ladite distance de visibilité au-dessous d'un certain seuil.

13. Système de commande d'au moins un projecteur et/ou d'un feu antibrouillard de véhicule **caractérisé en ce qu'**il comporte un dispositif selon l'une des revendications 11 ou 12 dont ledit dispositif émetteur est relié aux organes de puissance dudit projecteur et/ou dudit feu, ledit signal de commande commandant l'allumage et/ou l'intensité dudit feu et/ou dudit projecteur en fonction de ladite distance de visibilité.

14. Système de régulation de la vitesse d'un véhicule **caractérisé en ce qu'**il comporte un dispositif selon l'une des revendications 11 ou 12 dont ledit dispositif émetteur est relié à un organe de commande de la vitesse du véhicule, ledit signal de commande régulant la vitesse du véhicule en fonction de ladite distance de visibilité.

## Patentansprüche

1. Verfahren zum Bestimmen der Sichtweite (D) des Fahrers eines Fahrzeugs bei Vorliegen eines die Sicht des Fahrers beeinträchtigenden oder verändernden Elements im Bereich des Fahrzeugumfelds, bestehend aus Nebel, Rauch, Regen oder Schnee, das einen Schritt des Erfassens wenigstens eines Bildes (6) eines Raumbereichs aufweist, wobei das Verfahren **dadurch gekennzeichnet, dass** es die folgenden Schritte umfasst:
- einen Schritt zum Auffinden von Bereichen des Bildes, die jeweils einer Homogenitätsvorbedingung entsprechen,
- Bestimmen des Schwerpunkts (G1, G2) eines jeden solchen Bereichs,
- Bestimmen des Gesamtschwerpunkts (G) eines jeden dieser Schwerpunkte (G1, G2) der Bereiche,
- Bestimmen einer durch den Gesamtschwerpunkt (G) verlaufenden vertikalen oder im Wesentlichen vertikalen Linie (7),
- Teilen des Bildes in zwei Teile mittels der durch den Gesamtschwerpunkt (G) verlaufenden vertikalen oder im Wesentlichen vertikalen Linie (7),
- Bestimmen der Helligkeit der Pixel der vertikalen oder im Wesentlichen vertikalen Linie (7) in Abhängigkeit der Höhenlage der Pixel auf der vertikalen oder im Wesentlichen vertikalen Linie (7),
- Berechnen des Krümmungspunkts (I) der die Helligkeit lageabhängig darstellenden Kurve (8),
- Bestimmen der Sichtweite (D) des Fahrzeugführers anhand der Lage des Krümmungspunkts (I) auf dem Bild (8).

2. Verfahren nach dem vorhergehenden Anspruch,
**dadurch gekennzeichnet, dass** es einen Schritt des Aussendens eines Detektionssignals umfasst, wenn die Sichtweite (D) unter einen bestimmten Schwellenwert sinkt.

3. Verfahren nach Anspruch 1,
**dadurch gekennzeichnet, dass** der Schritt zum Auffinden der jeweils einer Homogenitätsvorbedingung entsprechenden Bereiche des Bildes mit einem Segmentierungsverfahren durch Unterteilen/Vereinigen ("Split and Merge") erfolgt.

4. Verfahren nach einem der vorhergehenden Ansprüche,
**dadurch gekennzeichnet, dass** die Helligkeit der Pixel durch einem Grauwert wiedergegeben ist.

5. Verfahren nach einem der vorhergehenden Ansprüche,
**dadurch gekennzeichnet, dass** das Berechnen des Krümmungspunkts der die Helligkeit lageabhängig darstellenden Kurve durch Ableitung (9) der Kurve erfolgt.

6. Verfahren nach einem der vorhergehenden Ansprüche,
**dadurch gekennzeichnet, dass** die Sichtweite unter Berücksichtigung des Fahrzeugniveaus korrigiert wird.

7. Verfahren nach einem der vorhergehenden Ansprüche,
**dadurch gekennzeichnet, dass** es zuvor einen Kalibrierungsschritt umfasst, mit dem die Horizontgrenze bei klarem Wetter bestimmt wird.

8. Vorrichtung (1) zum Durchführen des Verfahrens nach einem der vorhergehenden Ansprüche, mit einer Kamera (2) zum Erfassen wenigstens eines Bildes eines Raumbereichs, wobei die Vorrichtung **dadurch gekennzeichnet ist, dass** sie umfasst:
- Mittel zum Auffinden von Bereichen des Bildes, die jeweils einer Homogenitätsvorbedingung entsprechen,
- Mittel zum Bestimmen eines Schwerpunkts (G1, G2) eines jeden solchen Bereichs,
- Mittel zum Bestimmen des Gesamtschwerpunkts (G) eines jeden dieser Schwerpunkte (G1, G2) der Bereiche,
- Mittel zum Bestimmen einer durch den Gesamtschwerpunkt (G) verlaufenden vertikalen oder im Wesentlichen vertikalen Linie (7),
- Mittel zum Teilen des Bildes in zwei Teile mittels einer durch den Gesamtschwerpunkt (G) verlaufenden vertikalen oder im Wesentlichen vertikalen Linie (7),
- Mittel zum Bestimmen der Helligkeit der Pixel der vertikalen oder im Wesentlichen vertikalen Linie (7) in Abhängigkeit der Höhenlage der Pixel auf der vertikalen oder im Wesentlichen vertikalen Linie,
- Mittel zum Berechnen des Krümmungspunkts der die Helligkeit lageabhängig darstellenden Kurve,
- Mittel zum Bestimmen der Sichtweite des Fahrzeugführers anhand der Lage des Krümmungspunkts auf dem Bild.

9. Vorrichtung nach Anspruch 8,
**dadurch gekennzeichnet, dass** sich die Kamera hinter der Windschutzscheibe des Fahrzeugs befindet.

10. Vorrichtung nach Anspruch 8,
**dadurch gekennzeichnet, dass** sich die Kamera im Scheinwerfer des Fahrzeugs befindet.

11. Vorrichtung nach einem der Ansprüche 8 bis 10,
mit einer Vorrichtung zum Senden eines Steuersignals in Abhängigkeit der Sichtweite.

12. Vorrichtung nach einem der Ansprüche 8 bis 11,
mit Mitteln zum Erkennen des Absinkens der Sichtweite unter einen bestimmten Schwellenwert.

13. System zum Steuern wenigstens eines Fahrzeug- und/oder Nebelscheinwerfers,
**dadurch gekennzeichnet, dass** es eine Vorrichtung nach einem der Ansprüche 11 oder 12 umfasst, deren Sendevorrichtung mit den Leistungsorganen des Fahrzeug- und/oder Nebelscheinwerfers verbunden ist, wobei das Steuersignal das Einschalten und/oder die Helligkeit des Nebel- und/oder Fahrzeugscheinwerfers in Abhängigkeit der Sichtweite regelt.

14. System zum Regeln der Geschwindigkeit eines Fahrzeugs,
**dadurch gekennzeichnet, dass** es eine Vorrichtung nach einem der Ansprüche 11 bis 12 umfasst, deren Sendevorrichtung mit einem Organ zur Steuerung der Fahrzeuggeschwindigkeit verbunden ist, wobei das Steuersignal die Fahrzeuggeschwindigkeit in Abhängigkeit der Sichtweite regelt.

## Claims

1. Method for determining the visibility distance (D) of the driver of a vehicle in the presence of something which disturbs or alters the said driver's visibility in a field of the environment of the said vehicle, selected from mist, smoke, rain or snow, comprising a stage of identifying at least one image (6) in a field of space, the said method being **characterised in that** it comprises the following stages:
- a stage of searching zones of the said image each responding to a uniformity attribute,
- determination of the centre of gravity (G1, G2) of each of the said zones,
- determination of the overall centre of gravity (G) of each of the said centres of gravity (G1, G2) of the said zones,
- determination of a vertical or substantially vertical line (7) passing through the said overall centre of gravity (G),
- separation of the said image into two parts by the vertical or substantially vertical line (7) passing through the said overall centre of gravity (G),
- determining of the luminosity of the pixels of the said vertical or substantially vertical line (7) in relation to the height position of the said pixels on the said vertical or substantially vertical line (7),
- calculation of the inflection point (I) in the graph (8) representing the said luminosity as a function of the said position,
- determination of the visibility distance (D) of the driver of the said vehicle from the position of the said inflection point (I) on the said image (6).

2. Method according to the preceding claim, **characterised in that** it comprises a stage of emitting a detection signal when the said visibility distance (D) falls beneath a particular threshold.

3. Method according to claim 1, **characterised in that** the said stage of searching the zones of the said image each responding to a uniformity attribute is carried out using a division/fusion segmentation method.

4. Method according to any one of the preceding claims, **characterised in that** the said luminosity of the said pixels is represented by a grey level.

5. Method according to any one of the preceding claims, **characterised in that** calculation of the inflection point on the graph representing the said luminosity as a function of the said position is carried out by obtaining the derivative (9) of the said graph.

6. Method according to any one of the preceding claims, **characterised in that** the said visibility distance is corrected taking the trim of the said vehicle into account.

7. Method according to any one of the preceding claims, **characterised in that** it comprises a prior calibration stage determining the limit of the horizon in clear weather.

8. Device (1) for implementing the method according to any one of the preceding claims, comprising a camera (2) to obtain at least one image of a field of space, the said device being **characterised in that** it comprises:
- means for searching zones of the said image each responding to a uniformity attribute,
- means for determining the centre of gravity (G1, G2) of each of the said zones,
- means for determining the overall centre of gravity (G) of each of the said centres of gravity (G1, G2) of the said zones,
- means for determining a vertical or substantially vertical line (7) passing through the said overall centre of gravity (G),
- means for separating the said image into two parts by means of a vertical or substantially vertical line (7) passing through the said overall centre of gravity (G),
- means for determining the luminosity of the pixels in the said vertical or substantially vertical line (7) as a function of the height position of the said pixels on the said vertical or substantially vertical line,
- means for calculating the inflexion point of the graph representing the said luminosity as a function of the said position,
- means for determining the visibility distance of the driver of the said vehicle from the position of the said inflexion point on the said image.

9. Device according to claim 8, **characterised in that** the said camera is located behind the windscreen of the said vehicle.

10. Device according to claim 8, **characterised in that** the said camera is located in the headlamp of the said vehicle.

11. Device according to any one of claims 8 to 10 comprising a device emitting a command signal which is a function of the said visibility distance.

12. Device according to any one of claims 8 to 11 comprising means for detecting when the said visibility distance passes below a particular threshold.

13. System for controlling at least one vehicle headlamp and/or fog lamp **characterised in that** it comprises a device according to either of claims 11 or 12 in which the said emitting device is connected to the systems powering the said headlamp and/or said lamp, the said command signal controlling the lighting up and/or intensity of the said lamp and/or said headlamp in relation to the said visibility distance.

14. System for controlling the speed of a vehicle **characterised in that** it comprises a device according to either of claims 11 or 12 in which the said emitter device is connected to a system controlling the speed of the vehicle, the said command signal controlling the speed of the vehicle in relation to the said visibility distance.
